# EUROPÄISCHE PATENTSCHRIFT

(11) **EP 2 197 627 B1**
(45) Veröffentlichungstag und Bekanntmachung des Hinweises auf die Patenterteilung: **30.03.2011**
(21) Anmeldenummer: 08802230.6
(22) Anmeldetag: 16.09.2008
(51) Int. Cl.: B24B 33/02, B24B 27/00

(54) **VORRICHTUNG ZUR FEINBEARBEITUNG VON WERKSTÜCKEN**
DEVICE FOR FINE MACHINING WORKPIECES
DISPOSITIF D'USINAGE FIN DE PIÈCES

(30) Priorität: 17.09.2007 DE 102007045619
(43) Veröffentlichungstag der Anmeldung: 23.06.2010
(73) Patentinhaber: Gehring Technologies GmbH, 73760 Ostfildern (DE)
(72) Erfinder: WALTER, Alfred, 72622 Nürtingen (DE); BEY, Oliver, 73728 Esslingen (DE)
(74) Vertreter: Hellwig, Tillmann Johannes
(86) Internationale Anmeldenummer: PCT/EP2008/007696
(87) Internationale Veröffentlichungsnummer: WO 2009/036944

(56) Entgegenhaltungen:
- DE-A1- 19 846 278
- DE-A1- 19 929 695
- DE-A1-102004 053 503
- DE-U1- 29 500 756

## Beschreibung

Die Erfindung betrifft eine Vorrichtung zur Feinbearbeitung von Werkstücken, vorzugsweise zum Honen und/oder Feinbohren von Zylinderbohrungen in Kurbelgehäusen von Verbrennungsmotoren.

Es gibt heute verschiedene Honverfahren, so zum Beispiel Peak-Honen, Reibhonen, Gleithonen, Freiformhonen, Positionshonen, Bürsthonen, Fluidhonen, Laserstrukturieren usw. Alle Verfahren unterscheiden sich durch die Werkzeuge, die Drehzahlen, die Oszilliergeschwindigkeiten und gegebenenfalls den Aufbau der Werkzeuge und deren Zustellung. Für jedes Honverfahren gibt es verschiedene Honmaschinen. So wird zum Beispiel beim Positionshonen eine Drehzahl des Honwerkzeuges von bis zu 2.000 min⁻¹ bei gleichzeitiger steifer Spindellagerung benötigt. Für Fertig-/Plateauhonen hingegen ist eine Drehzahl von cirka 300 min⁻¹ bei gelenkiger Werkzeugaufnahme erforderlich. Wird aufgrund von Werkstoffänderungen oder einer Bauteiländerung das Honverfahren gewechselt, muss die Maschine umgebaut oder eine andere Honmaschine eingesetzt werden.

Es ist bekannt, eine Vielzahl unterschiedlicher Arbeitsstationen vorzusehen, wobei jede Arbeitsstation zur Durchführung mindestens eines Arbeitsschrittes konfiguriert ist und mindestens ein Teil als Honstation zur Durchführung einer Honoperation eingerichtet ist (DE 10 2004 053 503 A1). Der Erfindung liegt die Aufgabe zugrunde, eine autarke Bearbeitungseinheit zu schaffen, mit der möglichst viele unterschiedliche Bearbeitungsverfahren, zumindest aber verschiedene Honverfahren der oben genannten Art und auch das Feinbohren (auch Feinspindeln genannt), ohne Umbau durchgeführt werden können. Die Einheit soll insbesondere für Zylinderbohrungen in den Kurbelgehäusen für Verbrennungsmotoren, einsetzbar sein.

Die Aufgabe wird gemäß der Erfindung durch die im Patentanspruch 1 angegebenen Merkmale gelöst.

Bei einer Bestückung mit bis zu vier Bearbeitungseinheiten, die zum Honen und/oder Feinbohren ausgebildet sind, sind die wesentlichen Verfahren der Feinbearbeitung von Bohrungen in ein Modul integrierbar, entweder so, dass bis zu vier Bearbeitungsvorgänge nacheinander an einem Werkstück ausgeführt werden können oder auch, dass zwei oder mehr Bohrungen gleichzeitig bearbeitet werden können. Im erstgenannten Fall wird Bearbeitungszeit dadurch eingespart, dass, wenn auf einer Bearbeitungsstation ein erster Bearbeitungsvorgang (zum Beispiel Vorhonen oder Feinbohren) durch die erste Bearbeitungseinheit erfolgt, die zweite Bearbeitungseinheit bereits das für einen zweiten Bearbeitungsvorgang (zum Beispiel Fertighonen) erforderliche Werkzeug aus dem Werkzeugmagazin aufnimmt. Dies ist infolge der kompakten Zuordnung von zwei Bearbeitungseinheiten - an oder in Nähe einer Längsseite - zu einer von zwei Bearbeitungsstationen oder Bearbeitungsplattform und zu einem von zwei Werkzeugmagazinen möglich. Die Anordnung ist so gestaltet, dass die entlang einer Längsseite angeordneten Bearbeitungseinheiten sowohl auf die dieser Längsseite zugeordnete Bearbeitungsstation, als auch das dieser Längsseite zugeordnete Werkzeugmagazin zugreifen können.

Die Bearbeitungseinheit weist folgende Komponenten auf:
a) eine elektromotorisch drehangetriebene Spindel,
b) einen gemeinsamen Antrieb für die Oszillation der Spindel während der Bearbeitung und die Bewegung der Spindel in die Arbeitsposition, um die die Oszillation stattfindet,
c) eine Werkzeugaufnahme mit an der Spindel starr festgelegter Achse und während der Bearbeitung gleichbleibender Auskragung der Spindel (Auslenkung aus der Senkrechten durch angreifende Biegemomente)
d) eine Zustelleinrichtung zur radialen Zustellung der Bearbeitungswerkzeuge (zum Beispiel Honleisten, Feinbohrschneiden)

Diese Bearbeitungseinheit ist zur Durchführung aller Honverfahren geeignet. Man kann also dann zum Beispiel mit vier Bearbeitungseinheiten, die mit unterschiedlichen Werkzeugen bestückt sind, in einem Modul am selben Werkstück nacheinander oder an zwei gleichen Werkstücken gleichzeitig zum Beispiel das Vorhonen (oder das Feinbohren), das Fertighonen (zum Beispiel auch das Positionshonen), das Laserstrukturieren der Oberfläche und dann gegebenenfalls ein Anfasen durchführen.

Es wird somit eine komplette, autarke, flexible, modulare Bearbeitungszelle vorgeschlagen, die einerseits selbstständige, selbst mehrere Arbeitsgänge erfordernde Werkstücke vollständig bearbeiten kann, aber auch innerhalb kürzester Montage- und/oder Umrüstzeit in eine andere Fertigungslinie integriert werden kann. Die Außenabmessungen sind so gewählt, dass ohne Demontage von Komponenten ein Transport auf der Straße (Breite: 2,20 m, Höhe: 3,35 m) auf dem Seeweg (Container) und auf dem Luftweg (Bohlen) möglich ist.

Das komplette Modul verwendet als Antrieb der Spindel für die Oszillation und das Verfahren in Arbeitsposition vorteilhafterweise direkt angetriebene elektrische Linearmotoren. Diese sind in vorteilhafter Weise derart weitergebildet, dass der Linearmotor in U-Bauweise (Doppelkammausführung) ausgebildet ist. Damit ist er während des Laufs querkraftfrei.

Die Werkzeugaufnahme ist mit starrer Lagerung so ausgestaltet, dass sich die Spindellagerung im kleinstmöglichen Abstand zum Bohrungsanfang befindet. Es wird vorzugsweise ein kurzes und starr eingespanntes Honwerkzeug verwendet und die Spindellagerung mit der Huboszillation verbunden. Damit kann die Bearbeitungseinheit auch für das so genannte Positionshonen eingesetzt werden (DE 103 48 419 B3). Die Vielfalt der Einsatzmöglichkeiten wird ferner durch die Verwendung eines maschinenseitig integrierbaren Zustellmechanismus für das Honen und das Feinbohren gewährleistet, wie er in der älteren Patentanmeldung DE 10 2007 038 123.0 v. 04.08.2007 beschrieben ist. Diese Zustelleinrichtung expandiert das Honwerkzeug in konventioneller Weise und dient zur Voreinstellung und zur Nacheinstellung eines Feinbohrwerkzeuges.

Ausführungsbeispiele der Erfindung werden im Folgenden unter Bezugnahme auf die beigefügten Zeichnungen näher beschrieben. Es stellen dar:
- Figur 1: eine schematische Ansicht des Moduls mit vier Bearbeitungseinheiten;
- Figur 2: den Modul nach Figur 1, jedoch ohne die seitlichen Abdeckungen, so dass die inneren Installationen teilweise sichtbar werden;
- Figur 3: eine schematisierte Draufsicht auf den Modul gemäß Figur 1 und 2;
- Figur 4: die linke Hälfte des Moduls nach Figur 1 - 3 in perspektivischer Ansicht;
- Figur 4a: eine Variante zu Figur 4 bezüglich der Ausbildung der einen Hälfte eines Moduls (schematisch, ohne Seitenwand);
- Figur 4b: einen Schnitt durch einen zur Verschiebung einer Bearbeitungseinheit dienenden Linearmotor;
- Figur 5: die rechte Hälfte des Moduls 1 in perspektivischer Ansicht (entsprechend Figur 4);
- Figur 6: einen Schnitt durch die Zustelleinheit;
- Figur 7: zwei miteinander verkettete Module 1;
- Figur 8: die schematische Darstellung einer Arbeitsweise eines Moduls ausgelegt für die Komplettbearbeitung eines bestimmten Werkstücks (zwei dieser Werkstücke befinden sich im Modul);
- Figur 9: eine zweite Arbeitsweise, ausgelegt für verketteten Transferbetrieb;
- Figur 10: eine dritte Arbeitsweise, ausgelegt für Komplettbearbeitung, zum Beispiel Vorhonen einer Zylinderbohrung und gleichzeitiger Bearbeitung der Kurbelwellenbohrung.

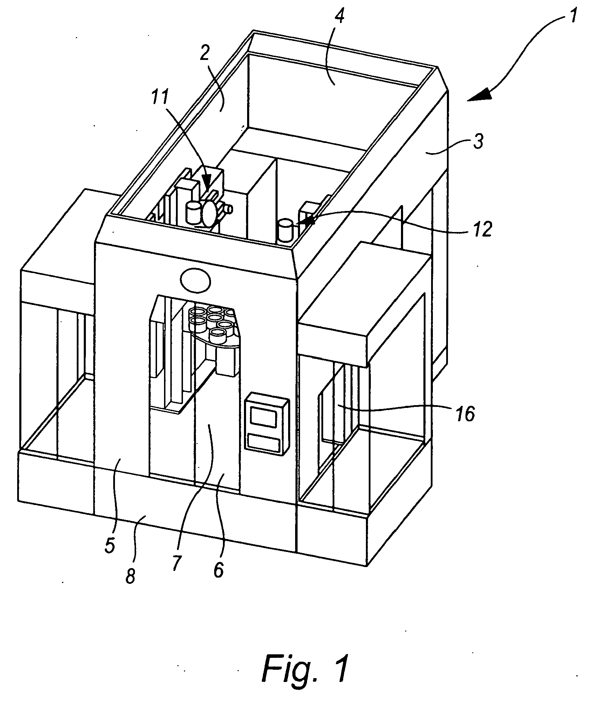

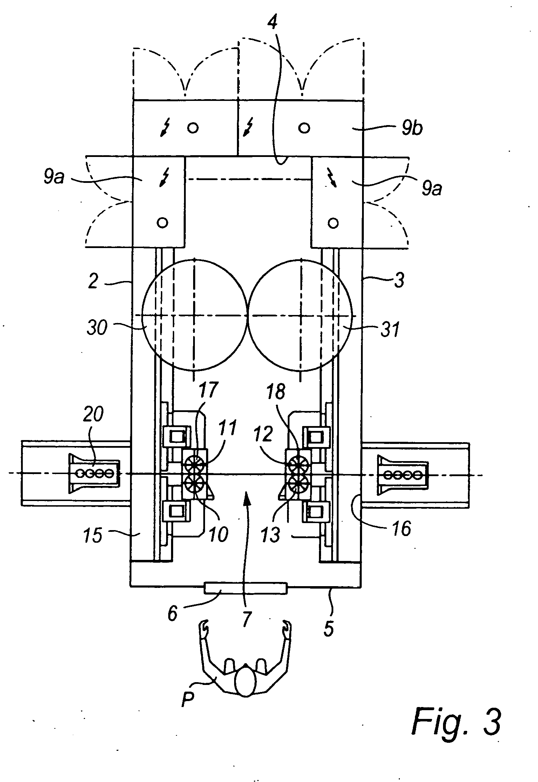

Figur 1 zeigt den allgemein mit 1 bezeichneten Modul, ausgebildet als Kabine mit Wänden entlang der beiden Längsseiten 2 und 3, der hinteren Stirnseite 4 und der vorderen Stirnseite 5, sowie einem Zugang 6 zu dem zentralen Serviceraum 7. Durch diesen Zugang 6 ist der Serviceraum 7 für eine Bedienungsperson P erreichbar (vergleiche Figur 3).

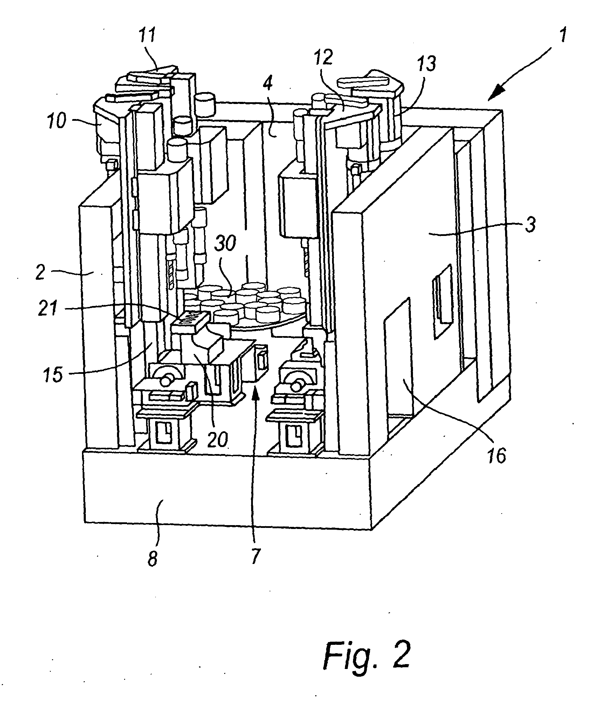

Wie aus Figur 2 zu ersehen, sind entlang der beiden Längsseiten je zwei Bearbeitungseinheiten 10, 11, 12 und 13 vorgesehen, so an der Längsseite 2 die Bearbeitungseinheiten 10 und 11 und an der Längsseite 3 die Bearbeitungseinheiten 12 und 13 angeordnet sind. In den Schaltschränken 9a an den Endabschnitten der Längsseiten und 9b an der Stirnseite 4 sind die zugeordneten Steuereinrichtungen untergebracht.

Durch miteinander fluchtende Portale 15, 16 sind Werkstücke 20 - im Beispiel das Kurbelgehäuse eines Verbrennungsmotors - in jeweilige Bearbeitungsstationen 17, 18 transportierbar, an denen sie von den jeweils an der zugeordneten Längsseite angeordneten Bearbeitungseinheiten 10, 11 (an Längsseite 2) beziehungsweise 12, 13 (an Längsseite 3) so erreichbar sind, dass diese an den dort aufgestellten Werkstücken 20 Arbeitsvorgänge durchführen können.

Im Bereich der hinteren Endabschnitte der Längsseiten 2, 3, nahe an der Stirnseite 4 befinden sich zwei Werkzeugmagazine 30, 31. Sie sind derart angeordnet, dass aus dem Werkzeugmagazin 30 von den Bearbeitungseinheiten 10, 11 und aus dem Bearbeitungsmagazin 31 von den Bearbeitungseinheiten 12, 13 Werkzeuge aufgenommen werden können. Dabei kann es sich zum Beispiel um Honwerkzeuge der verschiedensten Art oder um Feinbohrwerkzeuge handeln.

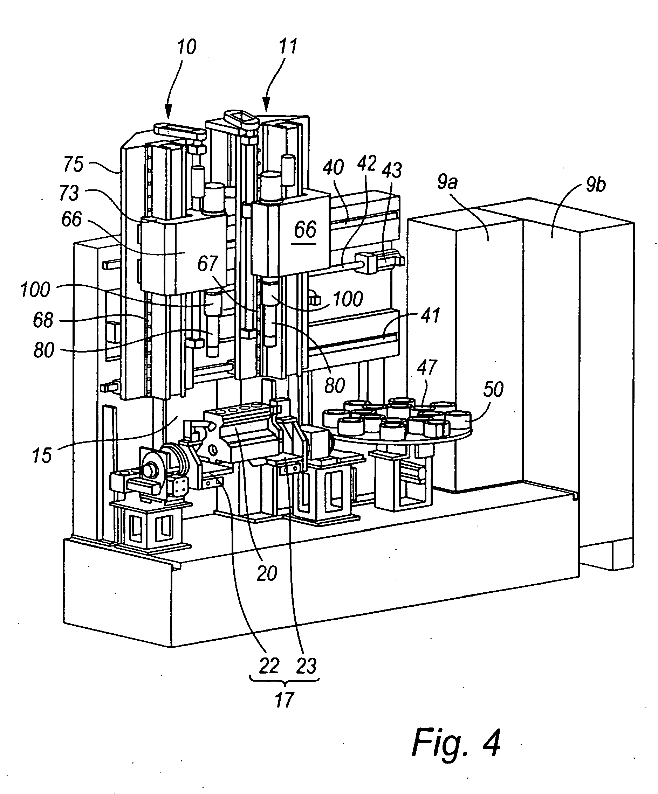

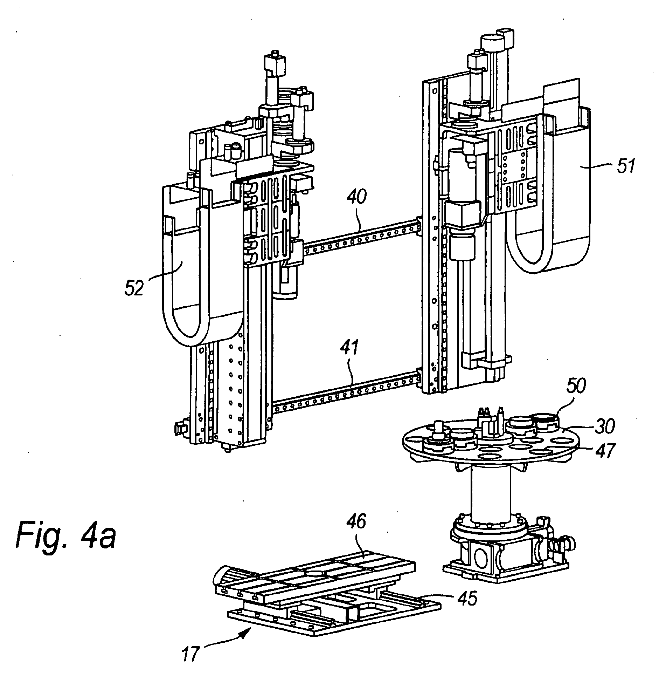

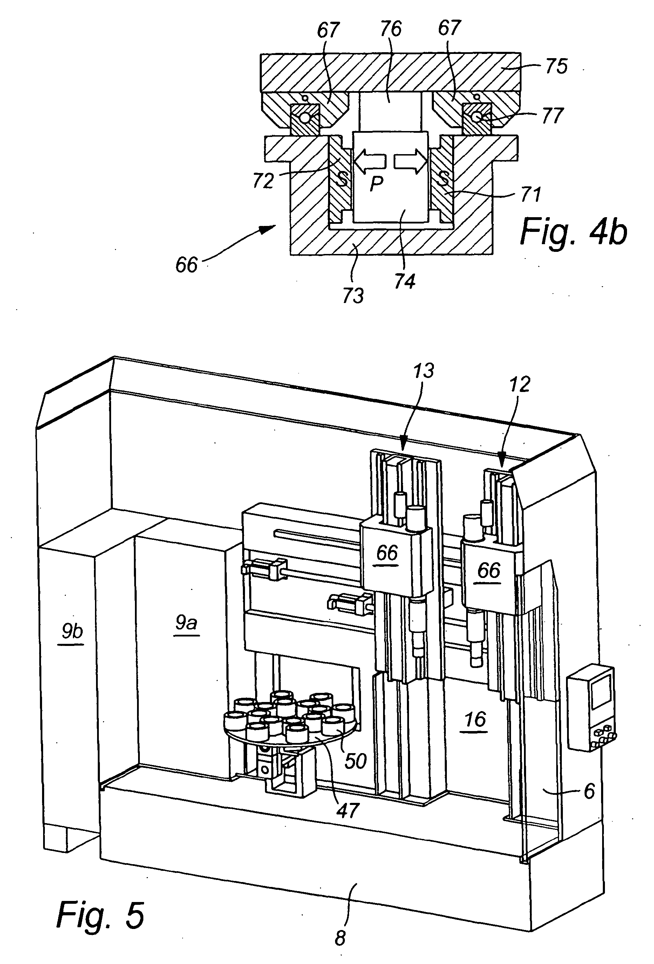

Figur 4 zeigt in perspektivischer Ansicht eine Hälfte (bezogen auf die Figuren 1 - 3: die linke Hälfte) eines Moduls 1 mit den Bearbeitungseinheiten 10, 11, wobei insbesondere Schienen 40, 41 ersichtlich sind, auf denen die Bearbeitungseinheiten 10, 11 horizontal verschiebbar sind. Ein Werkstück 20 wird von einer verschwenkbaren Arbeitsplattform, gebildet durch zwei schwenkbare Träger 22, 23 gehalten. Die Schwenkbarkeit wird genutzt, wenn die in einem Winkel zueinander stehenden Reihen von Bohrungen eines V-Motors zu bearbeiten sind.

Figur 4a zeigt Schienen 45, auf denen ein Schlitten 46, der die Arbeitsplattform bildet, in eine Position (Arbeitsposition) verfahren werden kann, in der die beiden Bearbeitungseinheiten auf ein darauf aufgespanntes Werkstück 20 zugreifen, das heißt dort arbeiten können. Es ist ferner auch ersichtlich, dass das Werkzeugmagazin 30 durch einen drehbaren Teller gebildet wird, der Aufnahmeöffnungen 47 für Werkzeugablage 50 aufweiset. Die Aufnahmeöffnungen sind im Beispiel in Form zweier konzentrischer Kreise angeordnet. Vorzugsweise sind die Werkzeuge, die von der (in Figur 4) linken Bearbeitungseinheit 10 aufgenommen werden, in der Werkzeugablage 50 in dem äußeren Kreis von Öffnungen 47 auf dem Teller angeordnet, während die Werkzeuge für die rechte Bearbeitungseinheit auf einem der inneren Kreise der Aufnahmeöffnungen 47 angeordnet sind. Auf diese Weise können die Wege, die die Bearbeitungseinheiten 10, 11 zum Werkzeugmagazin 30 führen müssen, gering gehalten werden. Man kann allerdings auch nur ein Werkzeugmagazin und dieses in der Mitte vor der hinteren Stirnseite vorsehen, das so groß ist, dass auf jedes Werkzeug von den Bearbeitungseinheiten auf beiden Seiten zugegriffen werden kann.

Der das Werkzeugmagazin 30 bildende Teller ist um eine senkrechte Achse drehbar, so dass in einer abgestimmten Steuerung das jeweils zu ergreifende Werkzeug in die geeignete Position, aus der es von einer Bearbeitungseinheit entnommen werden kann, gebracht wird. Die Zuführung der. Signale von der in den Schaltschränken 9a, 9b angeordneten Steuerungseinrichtung in den Bearbeitungseinheiten angeordneten Motoren erfolgt über Leitungen in Schleppkabeln 51, 52 (siehe Figur 4a).

Die Bearbeitungseinheiten 10, 11, 12 und 13 können sowohl Zustellstangen für Honwerkzeuge als auch Zustellstangen für Feinbohrwerkzeuge aufnehmen. Derartige Werkzeuge sind in der Patentanmeldung 10 2007 038 123.0 v. 04.08.2007 beschrieben.

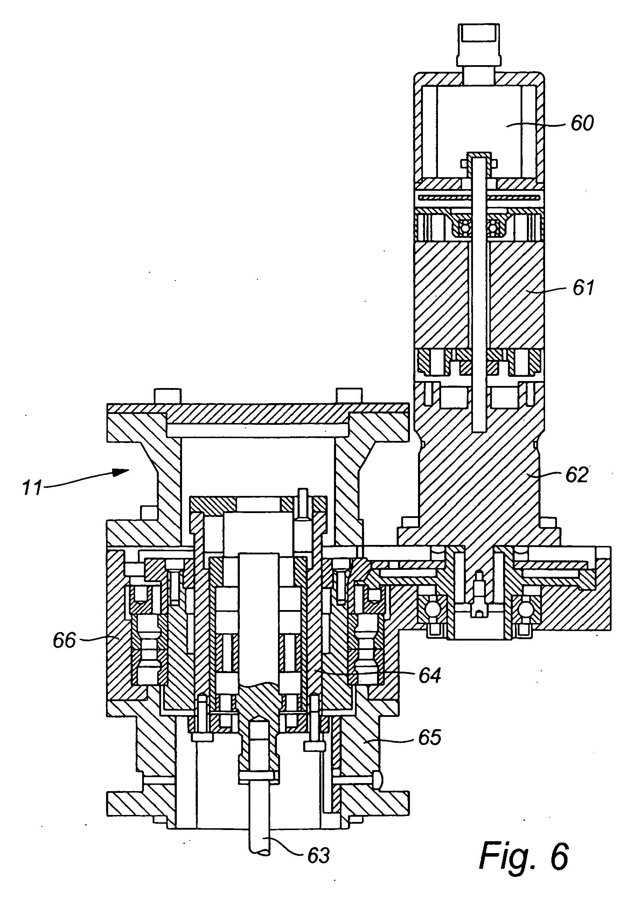

Der Aufbau einer Zustelleinheit, zum Beispiel für die Bearbeitungseinheit 11, die sowohl ein Honwerkzeug als auch ein Feinbohrwerkzeug aufnehmen, bewegen und zustellen kann, ist in Figur 6 dargestellt. Sie weist einen inkrementalen Drehweggeber 60 auf, der den Drehwinkel des Gleichstrommotors 61 bestimmt. Die Drehung wird in einem Getriebe 62 übersetzt und bewirkt die axiale Verschiebung der Kugelrollspindel 64 und der mit dieser verbundenen Zustellstange 63, die im Werkzeug die radiale Aufweitung einer Honleiste (im Falle eines Honwerkzeuges) oder einer Bohrschneide (im Falle eines Feinbohrwerkzeuges) herbeiführt.

Die Bearbeitungseinheit 10 (siehe Figur 4) wird durch eine Platte 75 gebildet, die entlang den Schienen 40 und 41 an diesen verfahrbar ist, und zwar mittels einer Spindel 42, die von einem Motor 43 drehangetrieben wird. Auf der Platte befinden sich vertikale Schienen 67, 68 (vergleiche auch Figur 4b), an denen mittels einer Längsführung 77 ein Spindelkasten 66 geführt ist. Der Spindelkastens 66 enthält die Spindel 100 und die Werkzeugaufnahme 80 senkrecht entlang den Schienen 67, 68 verfahrbar ist. Der Vertikalantrieb kann zum Beispiel ein elektrischer Linearmotor sein, der vorzugsweise dadurch querkraftfrei ausgebildet ist, dass auf der Innenseite der Schenkel des Rahmens 73 die Magnete 71 und 72 angeordnet ist, die den Sekundärteil (Stator) bilden. Das Primärteil (beweglicher Teil) 74 ist innerhalb dieses Rahmens 73 angeordnet und am Spindelkasten 66 gehalten. Der Antrieb kann auch hydraulisch oder als Gewindespindelantrieb ausgebildet sein. Die Anordnung der Spindeln 100 an den beiden Bearbeitungseinheiten 10, 11 ist derart, dass diese jeweils an den zueinander benachbarten Seiten der Bearbeitungseinheiten angeordnet sind und in dieser Position nebeneinander auch gleichzeitig benachbarte Bohrungen eines Werkstückes 20 bearbeiten können. Ihr Abstand beträgt zum Beispiel 150 mm.

Um sowohl das Feinbohren als auch das Honen - sowohl Vorhonen als auch Fertighonen - bewältigen zu können, müssen die Antriebe sowohl die für das Honen typischen Drehzahlen von 250 - 350 U/min als auch für das Feinbohren typischen Drehzahlen von über 1.000 U/min leisten können, wobei beim Feinbohren axiale Vorschübe von weniger als 1 min/min und beim Honen Vorschübe von 20 - 60 m/min zu leisten sind.

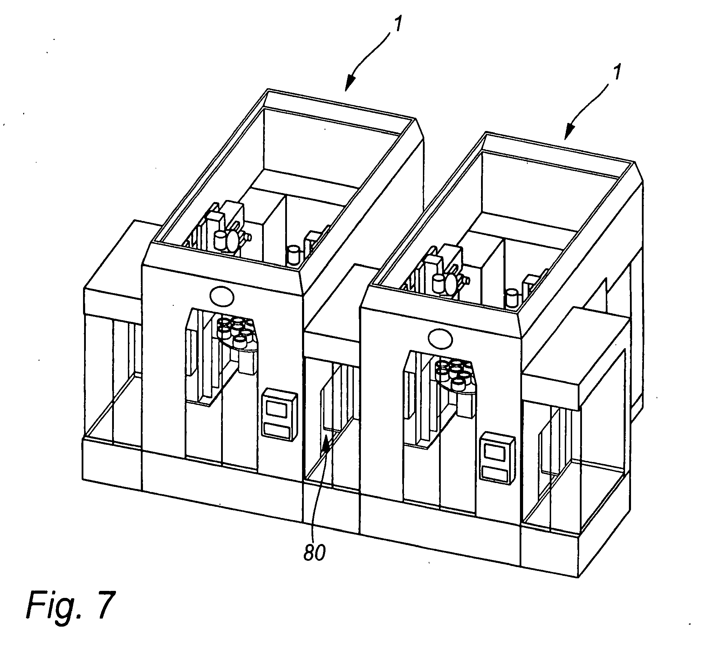

Gemäß Figur 7 können mehrere derartige Module 1 nebeneinander angeordnet sein, wobei zwischen zwei Modulen 1 jeweils noch ein Leermodul 80 eingesetzt ist, über die zwischen den Portalen der benachbarten Module und ein Zugang zu den Werkstücken und eventuell weitere Maßnahmen zur Kontrolle möglich sind.

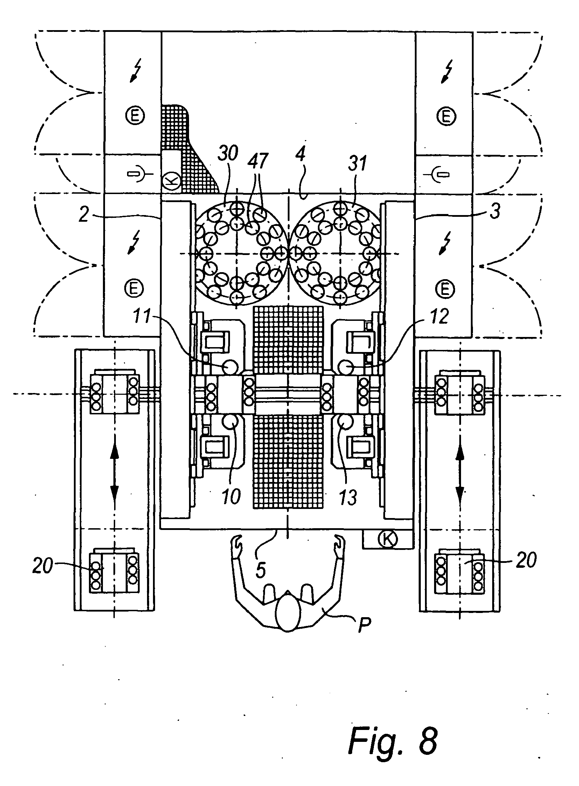

Figur 8 zeigt schematisch einen Modul, bei dem Werkstücke 20 sowohl von links als auch von rechts separat zu- und abgeführt werden, wobei die von links zugeführten Werkstücke 20 von den Bearbeitungseinheiten 10 und 11 die von rechts zugeführten Werkstücke von den Bearbeitungseinheiten 12 und 13 bearbeitet werden. Es können auch zwei Bearbeitungsschritte der Bearbeitungseinheiten 10 und 11 und ebenso der Bearbeitungseinheiten 12 und 13 durchgeführt werden.

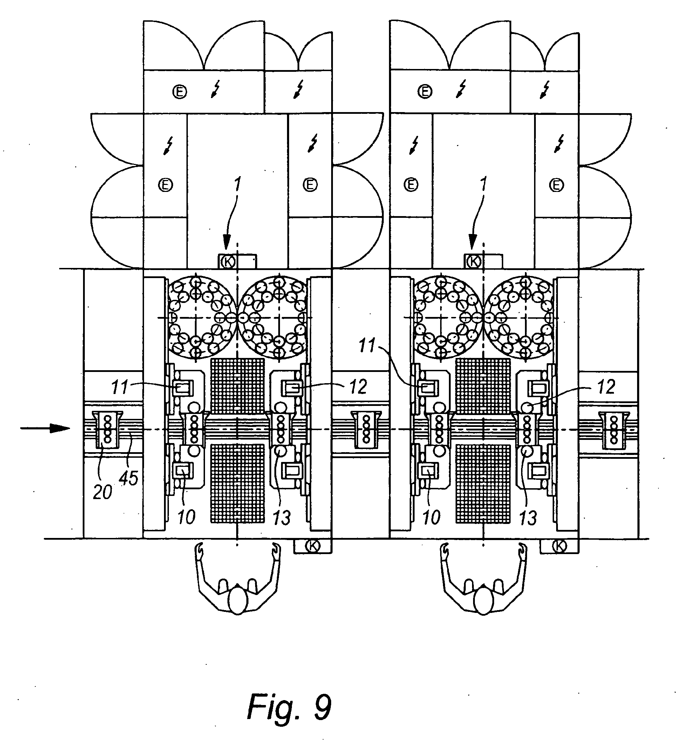

Figur 9 zeigt ein Ausführungsbeispiel, bei dem die Förderschienen für den Zu- und Abtransport der Werkstücke 20 durch die miteinander fluchtenden Portale 15, 16 der beiden derart miteinander verketteten Module 1 durch diese hindurchlaufen.

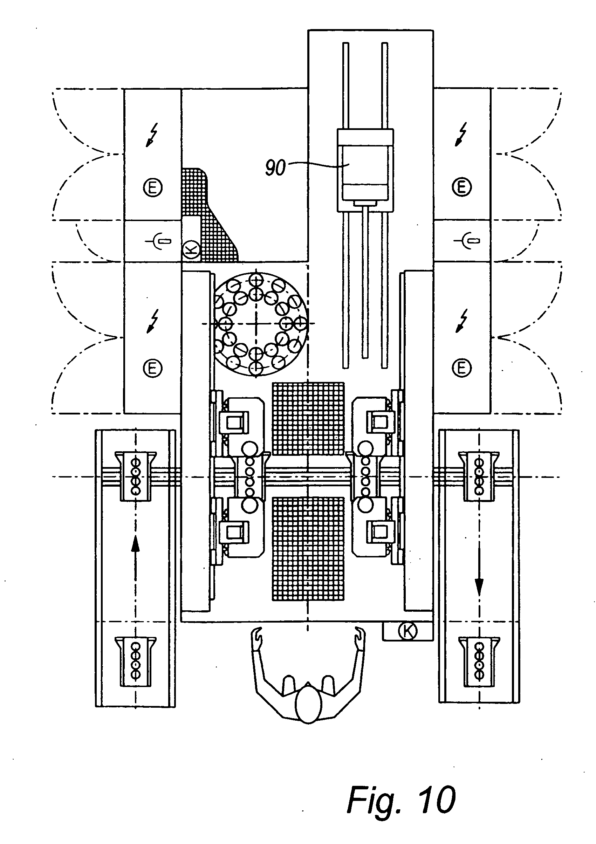

Figur 10 zeigt ein Ausführungsbeispiel, bei dem eine waagerechte Bearbeitungseinheit 90 horizontaler verschiebbar zur Bearbeitung der vertikalen miteinander fluchtend angeordneten Bohrungsabschnitte vorgesehen ist. Die Bohrungsabschnitte nehmen bei einem Kurbelgehäuse die Lager für die Kurbelwelle auf.

## Patentansprüche

1. Vorrichtung zur Feinbearbeitung von Werkstücken, vorzugsweise zum Honen und/oder Feinbohren von Zylinderbohrungen in Kurbelgehäusen von Verbrennungsmotoren, **dadurch gekennzeichnet, dass**
a) innerhalb eines Moduls (1)
b) mit im Wesentlichen rechteckigem Grundriss
c) innerhalb des Moduls an zwei einander gegenüberliegenden Längsseiten (2, 3) desselben je ein oder zwei horizontal verschiebbare Bearbeitungseinheiten (10, 11, 12, 13) zum Honen und/oder Feinbohren vorgesehen sind, wobei
d) jede Bearbeitungseinheit (10, 11, 12, 13)
aa) eine elektromotorisch angetriebene Spindel (100),
bb) einen elektromotorischen oder hydraulischen Antrieb, der sowohl zur Erzeugung der oszillierenden Hubbewegung der Spindel (100) als auch zur Verschiebung der Bearbeitungseinheit in Arbeitsposition dient,
cc) eine Werkzeugaufnahme (8) mit gegenüber der Achse der Spindel (100) starrer Achse, und
dd) eine Zustelleinrichtung (60, 61, 62, 63, 64) zur radialen Zustellung der Bearbeitungswerkzeuge aufweist, und dass
e) in dem Modul zwischen den mit den Bearbeitungseinheiten (10, 11, 12, 13) bestückten Längsseiten ein Serviceraum (7) vorgesehen ist,
f) der von einer der die Längsseiten verbindenden Stirnseite (5) her einen Zugang (6) hat, und
g) an einer Längsseite (2, 3) des Moduls und innerhalb desselben Bearbeitungseinheiten (10, 11, 12, 13), sowie an der der hinteren Stirnseite (4) des Moduls (1) mindestens ein Werkzeugmagazin (30, 31) angeordnet ist, und dass
h) innerhalb des Moduls an oder in Nähe jeder Längsseite eine Bearbeitungsstation (17, 18) vorgesehen ist, und dass
i) die Werkstücke (20) der Bearbeitungsstation durch an den Längsseiten (2, 3) angeordnete Portale (15, 16) zuführbar sind, wobei
j) beide Portale (15, 16) miteinander fluchten und
k) jede Bearbeitungsstation (17, 18) von den Bearbeitungseinheiten, die an der zugeordneten Längsseite angeordnet sind, zur Bearbeitung erreichbar ist und dass
l) die Förderschienen (45) für den Zu- und Abstransport der Werkstücke (20) durch die miteinander fluchtenden Portale (15, 16) hindurchlaufen.

2. Verfahren zur Feinbearbeitung von Werkstücken, vorzugsweise zum Honen und/oder Feinbohren von Zylinderbohrungen in Kurbelgehäusen von Verbrennungsmotoren in einer Vorrichtung nach Anspruch 1, **dadurch gekennzeichnet, dass** in einem Modul an demselben Werkstück nacheinander die Bearbeitungsvorgänge Vorhonen oder Feinbohren, Fertighonen, Laserstrukturieren oder Anfasen durchgeführt werden.

3. Verfahren zur Feinbearbeitung von Werkstücken, vorzugsweise zum Honen und/oder Feinbohren von Zylinderbohrungen in Kurbelgehäusen von Verbrennungsmotoren in einer Vorrichtung nach Anspruch 1, **dadurch gekennzeichnet, dass** an zwei gleichen Werkstücken gleichzeitig die Bearbeitungsvorgänge Vorhonen oder Feinbohren, Fertighonen, Laserstrukturieren der Oberfläche oder Anfasen durchgeführt werden.

## Claims

1. Apparatus for the precision machining of workpieces, and preferably for the honing and/or precision boring of the bores of cylinders in cylinder blocks of internal combustion engines, **characterised in that**
a) within a module (1)
b) of substantially rectangular outline in plan,
c) there are provided, within the module, on each of two mutually opposed longitudinal sides (2, 3) thereof, one or two horizontally displaceable machining units (10, 11, 12, 13) for honing and/or precision boring,
d) each machining unit (10, 11, 12, 13) having
aa) a spindle (100) driven by electric-motor means
bb) an electric-motor or hydraulic drive which serves both to produce the oscillating reciprocating movement of the spindle (100) and to displace the machining unit to the working position,
cc) a tool holder (80) having an axis which is fixed relative to the axis of the spindle (100), and
dd) a feeding arrangement (60, 61, 62, 63, 64) for feeding the machining tools in and out radially, and **in that**
e) there is provided in the module, between the longitudinal sides equipped with the machining units (10, 11, 12, 13), a servicing space (7)
f) which has an access (6) from the end (5) connecting the longitudinal sides, and
g) machining units (10, 11, 12, 13) are arranged on a longitudinal side (2, 3) of the module and within the module and at least one tool magazine (30, 31) is arranged at the rear end (4) of the module (1), and **in that**
h) a machining station (17, 18) is provided within the module at or in close proximity to each longitudinal side, and **in that**
i) the workpieces (20) can be fed to the machining station through portals (15, 16) arranged on the longitudinal sides (2, 3),
j) the two portals (15, 16) being in line with one another and
k) each machining station (17, 18) being able to be reached for machining purposes by the machining units which are arranged on the associated longitudinal side, and **in that**
l) the conveying rails (45) for transporting the workpieces (20) in and out pass through the portals (15, 16) which are in line with one another.

2. Method for the precision machining of workpieces, and preferably for the honing and/or precision boring of the bores of cylinders in cylinder blocks of internal combustion engines, on an apparatus according to claim 1, **characterised in that** the machining processes of pre-honing or precision boring, finish honing, laser structuring or bevelling are carried out in succession on the same workpiece in one module.

3. Method for the precision machining of workpieces, and preferably for the honing and/or precision boring of the bores of cylinders in cylinder blocks of internal combustion engines, on an apparatus according to claim 1, **characterised in that** the machining processes of pre-honing or precision boring, finish honing, laser structuring of the surface or bevelling are carried out simultaneously on two identical workpieces.

## Revendications

1. Appareil pour l'usinage fin de pièces à oeuvrer, de préférence pour le rodage et/ou l'alésage fin de perçages cylindrique dans des carters de vilebrequins de moteurs à combustion interne, **caractérisé en ce que**
a) à l'intérieur d'un module (1)
b) avec un contour de base essentiellement rectangulaire
c) à l'intérieur du module sur deux côtés longitudinaux mutuellement opposés (2, 3) de celui-ci, il est prévu respectivement une ou deux unités d'usinage (10, 11, 12, 13) capables de translation horizontale pour le rodage et/ou pour l'alésage fin, et
d) chaque unité d'usinage (10, 11, 12, 13) comprend
aa) une broche (100) à entraînement par moteur électrique,
bb) un entraînement un moteur électrique ou hydraulique, qui sert à la fois à engendrer le mouvement de soulèvement oscillant de la broche (100) et pour la translation de l'unité d'usinage en position de travail,
cc) un logement à outils (8) avec un axe fixe par rapport à l'axe de la broche (100), et
dd) un système d'approche (60, 61, 62, 63, 64) pour l'approche radiale des outils d'usinage, et **en ce que**
e) il est prévu un espace de service (7) dans le module entre les côtés longitudinaux équipés des unités d'usinage (10, 11, 12, 13),
f) lequel possède un accès (6) depuis une face frontale (5) qui relie les côtés longitudinaux, et
g) au moins un magasin à outils (30, 31) est agencé sur un côté longitudinal (2, 3) du module et à l'intérieur des mêmes unités d'usinage (10, 11, 12, 13), ainsi que sur la face frontale postérieure (4) du module (1), et
h) à l'intérieur du module il est prévu une station d'usinage (17, 18) sur chaque côté longitudinal ou à proximité de celui-ci, et
i) les pièces à oeuvrer (20) peuvent être amenées à la station d'usinage à travers des portiques (15, 16) agencés au niveau des côtés longitudinaux (2, 3), tels que
j) les deux portiques (15, 16) sont alignés l'un avec l'autre, et
k) chaque station d'usinage (17, 18) des unités d'usinage qui sont agencées sur le côté longitudinal associé, est accessible pour l'usinage, et
l) les rails de convoyage (45) pour le transport d'approche et d'enlèvement des pièces à oeuvrer (20) passent à travers les portiques (15, 16) alignés l'un avec l'autre.

2. Procédé pour l'usinage fin de pièces à oeuvrer, de préférence pour le rodage et/ou l'alésage fin de perçages cylindriques dans des carters de vilebrequins de moteurs à combustion interne dans un appareil selon la revendication 1,
**caractérisé en ce que** dans un module on exécute sur la même pièce à oeuvrer les uns après les autres les processus d'usinage que sont un rodage préliminaire ou un alésage fin, un rodage final, une structuration au laser ou un chanfreinage.

3. Procédé pour l'usinage fin de pièces à oeuvrer, de préférence pour le rodage et/ou l'alésage fin de perçages cylindriques dans des carters de vilebrequins de moteurs à combustion interne dans un appareil selon la revendication 1,
**caractérisé en ce que** l'on exécute sur deux pièces à oeuvrer identiques simultanément les processus d'usinage que sont un rodage préliminaire ou un alésage fin, un rodage final, une structuration au laser de la surface, ou un chanfreinage.
